# FASCICULE DE BREVET EUROPEEN

(11) **EP 0 838 416 B1**
(45) Date de publication et mention de la délivrance du brevet: **08.05.2002**
(21) Numéro de dépôt: 97402520.7
(22) Date de dépôt: 24.10.1997
(51) Int. Cl.: B65G 17/00, B28B 15/00, B65D 19/38, B65D 19/40

(54) **Support pour produit céramique**
Halter für keramische Produkte
Holder for ceramic products

(30) Priorité: 28.10.1996 FR 9613112
(43) Date de publication de la demande: 29.04.1998
(73) Titulaire: CERIC, 75008 Paris (FR)
(72) Inventeur: Hatton, Philippe, F-95400 Arnouville Les Gonesse (FR)
(74) Mandataire: Loyer, Bertrand

(56) Documents cités:
- EP-A- 0 147 896
- DE-A- 3 011 139
- GB-A- 777 205
- GB-A- 1 327 841
- GB-A- 2 062 760
- GB-A- 2 214 479
- GB-A- 2 231 019
- US-A- 3 565 017
- US-A- 4 461 379
- US-A- 4 625 857

## Description

La présente invention concerne d'une manière générale la manutention des produits crus dans l'industrie de la terre cuite, et plus particulièrement les dispositifs de transport ou supports sur lesquels sont disposés lesdits produits crus pour leur manutention.

La fabrication de produits en terre cuite débute par une étape de mise en forme, par moulage ou pressage, de la matière première, d'où il sort des produits humides et crus donc non rigides qu'il est nécessaire de supporter convenablement pour éviter leur déformation.

A cet effet, les produits humides et crus sont posés dès leur sortie de presse, sur des supports positionnés devant ladite presse.

Les produits doivent ensuite être séchés dans un séchoir avant d'être amenés dans un four de cuisson.

Les supports sont alors mis en place dans le séchoir, puis, une fois le séchage terminé, les produits secs sont déchargés et transférés vers l'unité de cuisson tandis que les supports sont stockés en attendant leur prochaine utilisation.

Ces supports, souvent appelés planchettes, circulent sur des convoyeurs en s'arrêtant devant les différents postes de travail et il est nécessaire qu'ils soient toujours disposés de manière précise pour que le travail, saisie ou pose des produits, saisie du support, etc ..., puisse être effectué dans de bonnes conditions.

C'est pourquoi les supports sont usuellement positionnés sur les convoyeurs au moyen de butées escamotables. Dans ces dispositifs connus, il est nécessaire de retenir le support et donc de le faire patiner jusqu'à l'arrivée sur la butée de positionnement, de ralentir le défilement des convoyeurs lors du positionnement des supports par rapport aux butées pour ne pas risquer d'à-coups pouvant déplacer les produits sur les supports, puis de faire accélérer le convoyeur pour rattraper le retard pris lors du positionnement et suivre la cadence imposée par la presse.

Les convoyeurs, les supports et les produits qu'ils portent sont alors soumis en permanence à des cycles d'accélération et de décélération ayant pour conséquence une usure prématurée des tapis de convoyeurs ou des courroies de transfert, une augmentation de la vitesse de déplacement et du bruit.

Le transport des supports peut également être réalisé à l'aide d'un dispositif de transfert tel qu'une pince qui soulève le support pour le transporter vers un autre point de l'installation. Il est nécessaire que les supports soient convenablement positionnés sur les dispositifs de transfert pour éviter la chute du produit céramique et éventuellement celle du support.

Lorsque les supports ne sont plus utilisés, il est enfin nécessaire de pouvoir les ranger de manière telle qu'ils occupent le moins de place possible.

Il est connu du US 3 565 017 de proposer des supports empilables conforme au préambule de la revendication 1, comportant deux pieds réalisés en pliant un profilé à section en demi-cercle de telle manière que la face concave dudit profilé soit toujours tournée vers le même côté du support. L'empilage des supports est réalisé en positionnant le profil inférieur convexe du pied d'un support dans le profil supérieur concave du pied du support disposé en dessous.

Cette disposition présente les inconvénients de ne pas convenir pour assurer le positionnement desdits supports sur un dispositif de transfert et de nécessiter que tous les supports soient positionnés suivant la même orientation lors de la réalisation de piles ce qui oblige à contrôler l'orientation des supports après utilisation.

La présente invention tend à proposer un support tel qu'il puisse être positionné de manière rapide et sûre tant sur les convoyeurs que sur les dispositifs de transfert et mis en piles en formant des piles stables, quelle que soit son orientation c'est-à-dire même s'il a été retourné au cours des diverses manipulations auxquelles il a été soumis.

A cet effet, l'invention propose un support pour produit céramique destiné à être soit posé sur un convoyeur, soit manipulé par un dispositif de transfert, soit mis en piles, du type comportant au moins un plateau et des pieds dont les parties supérieure et inférieure sont conformées de façon à avoir des formes complémentaires mâle et/ou femelle constituant des moyens de positionnement automatique, chaque pied portant au moins une forme mâle et une forme femelle, caractérisé en ce que lesdits moyens de positionnement automatique portés par le support sont disposés symétriquement par rapport à l'axe longitudinal et par rapport à l'axe transversal du support.

Le support selon l'invention est encore remarquable en ce que :
- le support comporte deux plateaux disposés l'un au-dessus de l'autre et conformés pour le transport de produits différents, ledit support pouvant être utilisé à l'endroit comme à l'envers,
- l'un au moins des pieds du support comporte un épaulement destiné à éviter un déplacement dudit support dans une direction parallèle à l'axe des pieds lorsqu'il est posé sur un autre support lors de la formation d'une pile et/ou sur un convoyeur et/ou pris en charge par un dispositif de transfert,
- le support est constitué de pieds et de traverses reliées aux pieds par leurs extrémités, lesdites traverses étant destinées à permettre le positionnement d'un plateau amovible,
- les formes complémentaires sont constituées par un dièdre ouvert vers le bas,
- les formes complémentaires sont constituées par des dièdres tronqués, de section trapézoïdale,
- les formes complémentaires sont constituées par des cônes,
- les formes complémentaires portées par les supports sont à surface arrondie.

L'invention sera mieux comprise grâce à la description qui va suivre donnée à titre d'exemple non limitatif en référence aux dessins annexés dans lesquels :
- la figure 1 montre un dispositif selon une première forme,
- la figure 2 montre un dispositif selon une seconde forme,
- la figure 3 montre un dispositif selon une troisième forme,
- la figure 4 montre le dispositif selon la figure 3 positionné sur un convoyeur,
- la figure 5 montre la prise du dispositif de la figure 3 par un moyen de manutention à pince,
- la figure 6 représente une pile de dispositifs selon la figure 3,
- la figure 7 montre deux dispositifs suivant une quatrième forme positionnés sur un convoyeur et portant des produits différents,
- la figure 8 montre un dispositif selon une cinquième forme,
- la figure 9 est une vue en perspective d'un dispositif selon une première forme de réalisation de l'invention,
- les figures 10a et 10b sont des vues partielles en coupe respectivement suivant les lignes A-A et B-B du dispositif représenté à la figure 9,
- la figure 11 est une vue en perspective d'un dispositif selon une seconde forme de réalisation de l'invention,
- les figures 12a et 12b représentent deux exemples de réalisation du plateau adaptable sur le dispositif de la figure 11,
- la figure 13, est une vue en perspective d'un dispositif selon une sixième forme,
- la figure 14 est une vue de côté du dispositif représenté à la figure 13,
- les figures 15 à 19 montrent schématiquement des variantes de réalisation du moyen de positionnement et du pion.

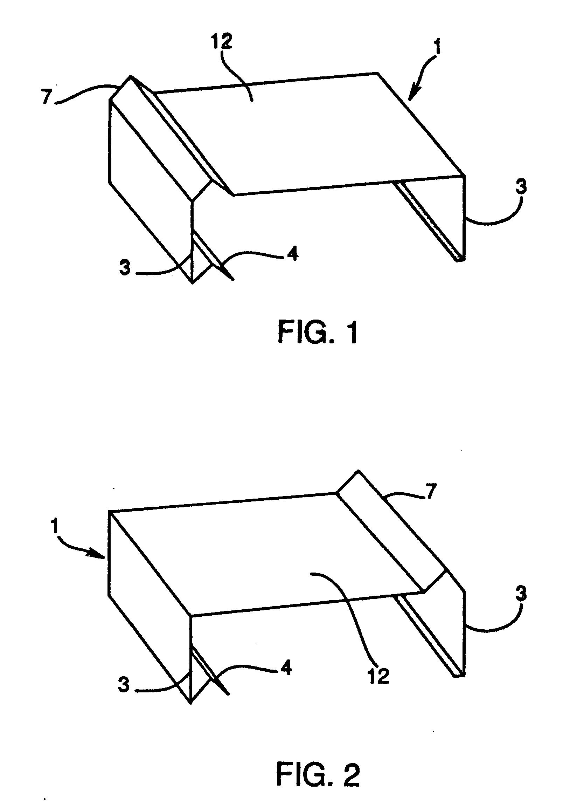

Les figures 1-8, 13 et 14 montrent des formes de réalisation qui ne font pas partie de la présente invention.

Comme visible sur les dessins, un dispositif pour le transport de produits céramiques ou support 1 comporte globalement un plateau 2, 12 recevant le produit à sécher et des pieds 3.

De manière connue en soi, le plateau 2, 12 est conformé de manière à fournir au produit des appuis convenablement disposés et l'on utilise usuellement dans une unité de fabrication plusieurs jeux de supports dont les plateaux sont adaptés à des produits de formes différentes. A titre d'exemple, les plateaux 12 des supports 1 et 100 représentés au dessin sont destinés au transport de produits plats tandis que les plateaux 2 des supports 10 et 100 représentés au dessin sont destinés au transport d'un produit partiellement incurvé.

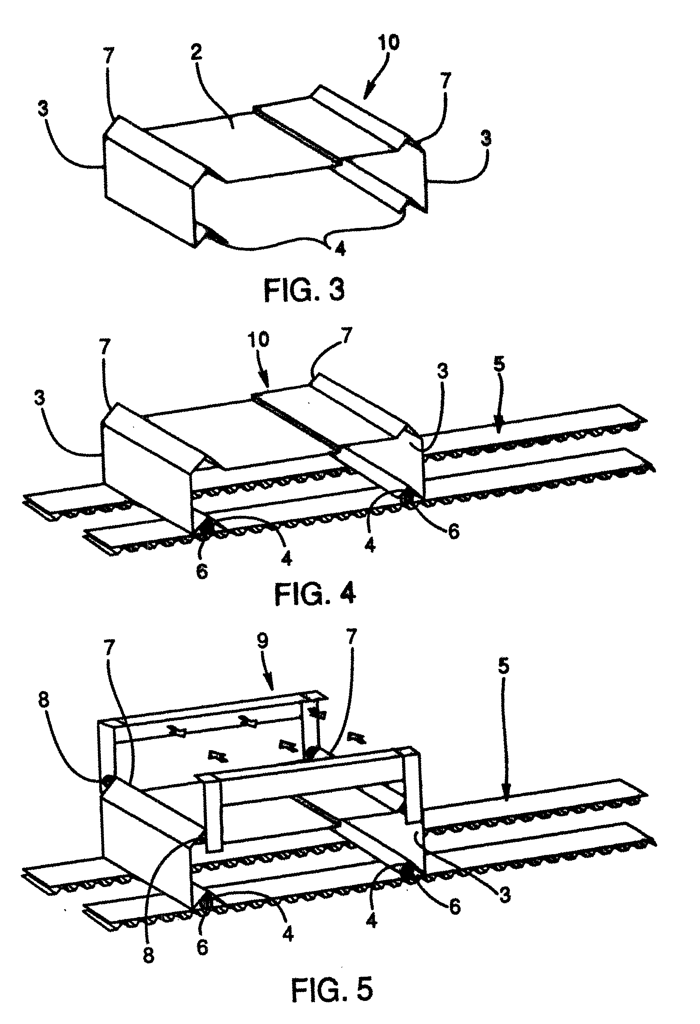

Au cours de la fabrication des produits céramiques, ces supports sont de manière usuelle transportés d'un poste à un autre soit en étant posés sur un convoyeur 5 comme représenté à la figure 4, soit en étant portés par un dispositif de transfert et de manutention tel que la pince 9 représentée à la figure 5.

Les convoyeurs 5, qu'ils soient à un ou plusieurs tapis, à chaîne, ou de toute autre constitution, sont munis à leur surface de pions 6 permettant le positionnement des supports à une distance prédéterminée les uns des autres de manière à accorder la fréquence de passage des supports devant chaque poste de travail à la cadence de la presse.

Dans l'exemple représenté aux figures 4, 5 et 7, les pions 6 sont constitués par un cylindre de faible hauteur disposé verticalement et surmonté par une demi-sphère.

Les pinces 9 comportent deux mâchoires déplaçables dans le sens des flèches représentées au dessin pour se positionner soit sous les pieds, soit sous le plateau du support et soulèvent ainsi le support pour le transporter vers un autre poste de travail, l'une au moins des mâchoires est munie de pions 8 en forme de doigt dans l'exemple représenté à la figure 5.

Dans la suite de la description, l'expression moyen de positionnement automatique pourra être utilisée pour désigner la conformation particulière donnée aux parties supérieure et/ou inférieure des pieds de manière à permettre le positionnement précis du support sur un convoyeur, sa prise en charge précise par un dispositif de transfert et manutention et/ou la constitution de piles stables de supports.

Les pieds du support ont leurs extrémités supérieure et/ou inférieure conformées de manière telle que le support comporte des formes complémentaires, au moins une mâle et au moins une femelle, la distinction mâle ou femelle est faite en fonction de la forme convexe ou concave que l'on voit de l'extérieur du support.

Si l'on se reporte à la figure 1 des dessins, le support 1 porte deux formes complémentaires, l'une femelle 4 et l'autre mâle 7.

De manière avantageuse, comme on le remarque sur les dessins, la forme mâle 7 est creuse et forme, vu de l'espace intérieur du support, une forme femelle semblable à la forme 4. Par cette disposition, les dispositifs de transfert tels que la pince 9 peuvent saisir le support par l'extérieur, en-dessous des extrémités inférieures des pieds 3, ou en étant insérés dans l'espace interne du support comme représenté à la figure 5.

Dans les exemples représentés aux figures 1 à 14, les moyens de positionnement automatique des supports sont formés par des dièdres ouverts en direction du pion du convoyeur ou du dispositif de transfert et destinés à venir coiffer ledit pion pour positionner avec précision le support sur le moyen de transport mis en oeuvre.

Grâce à cette disposition, le support se met automatiquement dans la position recherchée par rapport aux pions 6 ou 8 du moyen de transport.

En effet, si le support n'est pas parfaitement positionné par rapport aux pions 6 ou 8, l'appui des parois obliques du dièdre formant le moyen de positionnement automatique oblige le support à glisser sur le pion jusqu'à ce que ledit pion soit parfaitement coiffé par ledit dièdre. Le support est alors en appui par les deux faces du dièdre sur le pion et ne peut plus subir de déplacement par rapport à celui-ci au cours de son transport.

Les formes complémentaires portées par le support permettent donc de rattraper des écarts de positionnement et d'accepter ainsi les tolérances des manutentions et des différents transferts auxquels sont soumis les supports.

La figure 1, montre un support 1 dont les deux moyens de positionnement automatique 4 et 7 sont positionnés sur le même pied 3.

De manière avantageuse, le dièdre 7 formant le moyen de positionnement destiné à coopérer avec un pion 8 d'une pince 9 est disposé à la verticale du dièdre 4 formant le moyen de positionnement destiné à coopérer avec un pion 6 d'un convoyeur et est de même angle.

Grâce à cette disposition, les supports peuvent être aisément empilés les uns sur les autres, la forme femelle 4 en dièdre disposée à la base du pied 3 du support disposé sur le dessus s'emboîtant sur la forme mâle 7 en dièdre prévue au sommet disposé le long du plateau 12 du pied 3 du support situé en-dessous.

Un tel empilage des supports permet d'une part de réduire le volume nécessaire à leur stockage lorsqu'ils sont inutilisés et ne portent pas de produit céramique, et d'autre part de pouvoir éviter l'utilisation de clayettes en disposant directement des piles de supports portant des produits céramiques sur les wagons assurant leur transport dans les enceintes de traitement.

Dans la figure 2, un pied porte la forme 4 destinée à coopérer avec un pion 6, 8 d'un convoyeur ou d'une pince et un autre pied porte la forme 7 destinée à permettre l'empilage des supports ou à coopérer si nécessaire avec un pion 8 d'une pince.

Les supports 1 de la figure 2 peuvent être empilés pour leur stockage à condition de les faire tourner les uns par rapport aux autres dans leur plan, c'est-à-dire autour d'un axe perpendiculaire au plateau et passant par le centre de celui-ci, pour disposer un dièdre 4 sur un dièdre 7.

Le support 10 représenté aux figures 3 à 6 constitue un support pouvant être transporté par un convoyeur ou par une pince d'un dispositif de transfert et pouvant être mis en piles.

Comme visible au dessin, ce support 10 est muni de deux moyens 4 et de deux moyens 7 pour son positionnement sur un convoyeur 5, son positionnement dans une pince et/ou la formation de piles.

A cet effet, chaque pied 3 du support est muni d'un moyen de positionnement 4 à sa base et d'un moyen de positionnement 7 à son sommet disposé le long du plateau 2.

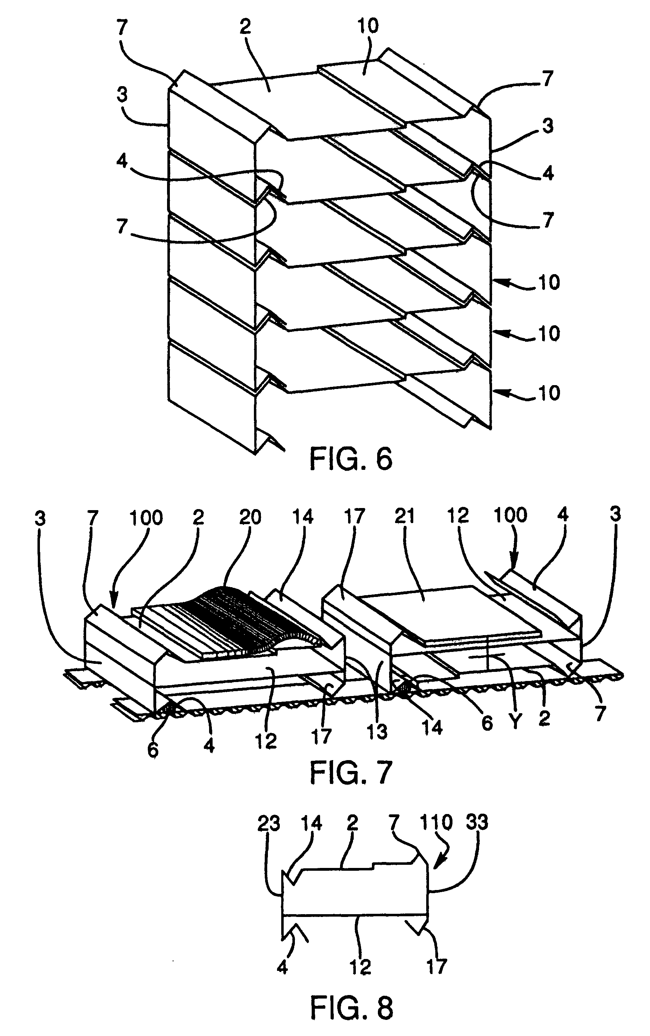

La figure 6 montre un empilage de supports 10. Les supports 100 représentés à la figure 7 sont des supports pouvant être utilisés pour le transport de deux types de produits, le support étant retourné pour transporter le deuxième type de produit.

A cet effet, les supports 100 comportent deux plateaux 2 et 12 disposés l'un au-dessus de l'autre. Dans l'exemple représenté au dessin, le plateau 2 est semblable à celui représenté aux figures 3 à 6 et est destiné au transport d'une tuile 20 en partie arrondie, tandis que le plateau 2 est totalement plat comme celui des figures 1 et 2 et est destiné au transport d'une tuile plate 21.

Le plateau 2 relie deux extrémités des pieds 3 et 13 tandis que le plateau 12 est disposé environ à mi-hauteur desdits pieds dans l'exemple représenté.

Le support permet le transport de tuiles 20 lorsqu'il est posé avec le plateau 2 au-dessus, alors qu'il permet le transport des tuiles 21 lorsque le plateau 12 est placé au-dessus après avoir retourné le support autour de l'axe Y disposé transversalement.

Le support devant être utilisé à l'endroit comme à l'envers, il est nécessaire de prévoir pour chaque disposition un moyen de positionnement du support sur un convoyeur ou sur une pince.

Afin de ne pas compliquer la description, on appelle base d'un pied son extrémité posée sur le convoyeur lors de l'utilisation du support. Si l'on considère la figure 7, lors du transport d'une tuile 20, les bases des pieds 3 et 13 sont celles qui portent respectivement les moyens 4 et 17 tandis que lors du transport d'une tuile 21, lesdites bases portent les moyens 7 et 14.

Dans l'exemple de la figure 7, le pied 3 porte à sa base le moyen 4 de positionnement sur un moyen de transport, convoyeur 5 ou pince 9, du support 100 utilisé pour le transport d'une tuile 20 (partie gauche de la figure) et porte à son sommet le moyen 7 permettant la formation de piles et/ou le positionnement dudit support sur une pince, tandis que lors du transport d'une tuile 21 (partie droite de la figure), le pied 13 porte à sa base le moyen 14 de positionnement du support 100 sur le moyen de transport et à son sommet le moyen 17 permettant la formation de piles et/ou le positionnement du support sur une pince.

Les moyens de positionnement 4, 7, 14 et 17 sont disposés et dimensionnés de manière à rendre les supports 100 empilables les uns sur les autres quelle que soit leur orientation.

Lesdits moyens de positionnement sont disposés symétriquement par rapport à l'axe transversal du support de manière telle qu'une rotation du support autour de son axe transversal conserve le même profil de positionnement dudit support sur un moyen de transport.

La figure 8 représente schématiquement un support permettant le transport de deux types de produits.

Le pied 23 de ce support 110 est muni des deux moyens de positionnement du support sur un moyen de transport, convoyeur ou pince, tandis que le pied 33 porte les deux moyens permettant la formation de piles et/ou le positionnement du support sur une pince.

Lors du transport d'un produit sur le plateau 2, la base du pied 23 porte le moyen 4 de positionnement du support 110 sur un convoyeur ou une pince tandis que le sommet du pied 33 est muni du moyen 7 permettant la formation de piles et/ou le positionnement du support 110 sur une pince.

Lorsque le support est retourné pour le transport d'un produit sur le plateau 12, la base du pied 23 porte le moyen 14 de positionnement sur un moyen de transport et le sommet du pied 33 porte le moyen 17 permettant la formation de piles et/ou le positionnement sur une pince.

Dans cette forme, les moyens de positionnement sont disposés symétriquement par rapport à l'axe longitudinal du support.

Ce support 110 est également empilable à condition de positionner les pieds 33 et 23 en alternance, en faisant tourner le support autour de son axe transversal.

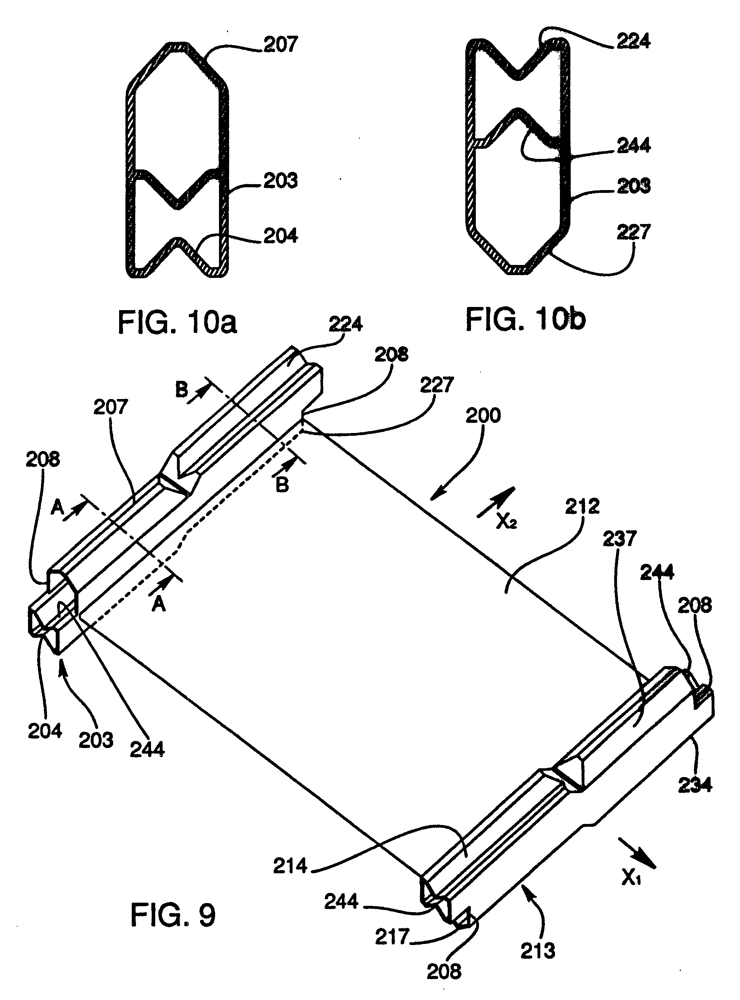

La figure 9 représente un support 200 suivant une première variante de réalisation de l'invention dans laquelle les moyens de positionnement sont disposés symétriquement par rapport à l'axe longitudinal X1 et symétriquement par rapport à l'axe transversal X2.

Chaque pied de ce support est alors muni de deux moyens femelles et de deux moyens mâles de positionnement du support sur un convoyeur ou sur une pince et/ou permettant la formation de piles.

Comme visible sur le dessin, chaque pied 203, 213 du support 200 est constitué de deux moitiés de sections différentes mises bout à bout.

C'est ainsi que, si l'on considère le support 200 tel qu'il est orienté sur la figure 9 :
- la partie avant du pied 203 porte à sa base un moyen 204 de positionnement sur un moyen de transport et à son sommet, un moyen 207 de forme complémentaire permettant la formation de piles et/ou le positionnement sur une pince,
- la partie arrière du pied 203 porte à sa base un moyen 227 permettant la formation de piles et/ou le positionnement sur une pince et à son sommet, un moyen 224 de forme complémentaire permettant d'assurer le positionnement sur un moyen de transport,
- la partie avant du pied 213 porte à sa base un moyen 217 permettant la formation de piles et/ou le positionnement sur une pince et à son sommet un moyen 214 de forme complémentaire permettant d'assurer le positionnement sur un moyen de transport,
- la partie arrière du pied 213 porte à sa base un moyen 234 de positionnement sur un moyen de transport et à son sommet, un moyen 237 de forme complémentaire permettant la formation de piles et/ou le positionnement sur une pince.

Les figures 10a et 10b montrent des sections du pied 203 respectivement dans sa partie avant et dans sa partie arrière. La section représentée à la figure 10a est également celle du pied 213 considéré dans sa partie et la section de la figure 10b est également celle de la partie avant de ce pied 213.

Un tel support 200 peut être utilisé à l'endroit comme à l'envers, c'est-à-dire en positionnant le produit céramique sur l'une ou l'autre face du plateau 212.

Il est bien entendu possible d'augmenter la hauteur des pieds 203 et 213 de manière à permettre la mise en place de deux plateaux destinés au transport de produits de formes différentes.

Le support 200 présente un grand intérêt du fait qu'il reste identique à lui-même quels que soient les mouvements auxquels il est soumis : rotation autour d'un axe vertical, c'est-à-dire perpendiculaire au plateau 212, retournement autour de l'axe longitudinal X1 ou retournement autour de l'axe transversal X2. Les supports 200 sont donc toujours empilables quels que soient les changements de position qu'ils ont subis.

Les pieds 203, 213 support 200 représenté au dessin comporte des épaulements 208 destinés à éviter un déplacement du support dans une direction parallèle à l'axe des pieds lorsqu'il est transporté par le moyen de transport ou la pince.

Les portions de pieds dépassant transversalement des épaulements 208 sont, dans l'exemple représenté au dessin, conformées afin de présenter une forme 244 permettant la prise en charge précise du support par un dispositif de transfert tel qu'une pince.

Il est bien entendu possible de former de tels épaulements 208 sur un seul des pieds du support.

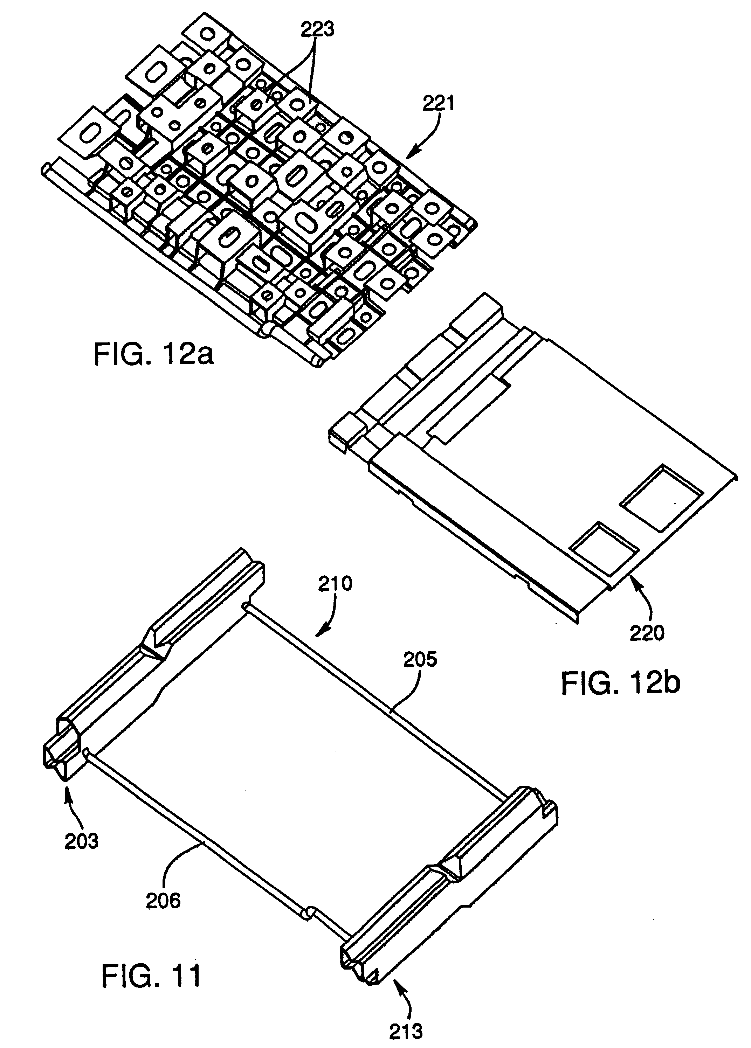

La figure 11 montre une seconde variante de réalisation de l'invention dans laquelle le support 210 porte un plateau amovible. Le support 210 est constitué de pieds, identiques aux pieds 203 et 213 du plateau 200 dans l'exemple représenté au dessin, et de traverses 205, 206.

Lesdites traverses 205, 206 sont chacune reliée par leurs extrémités aux pieds 203 et 213 du support. Comme représenté, les traverses peuvent être rectilignes ou courbes.

Les figures 12a et 12b représentent des exemples de réalisation du plateau 220, 221 destiné à être positionné sur les traverses 205 et 206 du support 210.

Grâce à ce mode de réalisation, le même support 210 peut être utilisé quel que soit le type de produit à transporter, tuiles de formes différentes ou accessoires : il suffit de changer le plateau pour l'adapter au produit.

Cette disposition permet de réduire considérablement le volume de stockage et les frais d'immobilisation des différents moyens de transports de produits nécessaires dans l'usine puisqu'il n'est plus nécessaire de stocker autant de supports de formes différentes que de produits fabriqués dans l'usine mais uniquement les plateaux adaptés à chaque produit qui sont des objets pratiquement plats donc peu encombrants.

Cette disposition permet une optimisation très fine des plateaux 220, 221 en ce qui concerne leur forme, la matière utilisée, etc ... du fait qu'ils sont fabriqués comme une pièce indépendante destinée à être positionnée sur des supports 210 et non comme une partie d'un support complet qu'il est nécessaire de solidariser aux pieds. A titre d'exemple, les plateaux peuvent être fabriqués dans des matières différentes telles que le bois, la matière plastique thermoformée ou injectée, des feuilles métalliques embouties et/ou soudées.

A titre d'exemple, la figure 12a représente un plateau réalisé par injection de matière plastique qui présente, sur chacune de ses faces, des portions de surface planes 223 disposées dans des plans différents et réparties suivant une géométrie telle qu'il soit possible de soutenir dans de bonnes conditions différents types de tuiles ou d'accessoires.

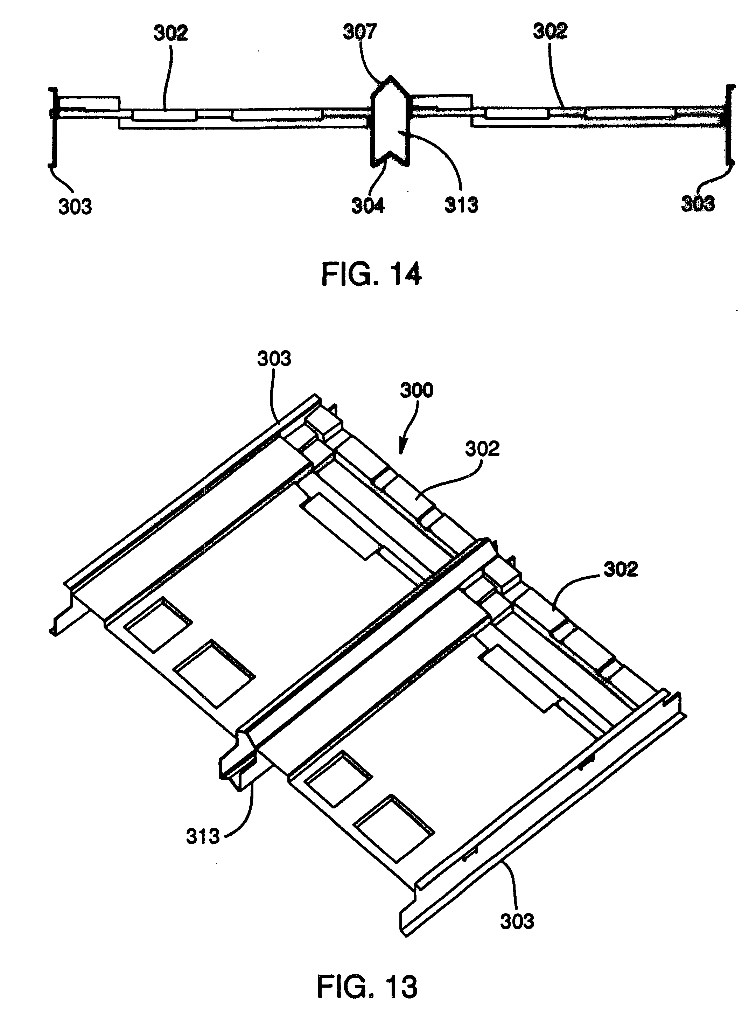

Le support 300 représenté aux figures 13 et 14 comportant trois pieds et deux plateaux. Ce support 300 peut être considéré comme un support double constitué de deux supports côte à côte. Il comporte trois pieds et deux plateaux 302.

Dans l'exemple représenté au dessin, les pieds 303 disposés aux extrémités sont constitués par une cornière et ne portent pas de moyens de positionnement. Seul le pied central 313 porte à sa base un moyen 304 de positionnement sur un moyen de transport et à son sommet un moyen 307 de forme complémentaire permettant la formation de piles et/ou le positionnement sur une pince. Il est bien entendu possible de prévoir les moyens de positionnement sur un autre pied que le pied central et/ou de prévoir des moyens de positionnement sur plus d'un pied.

Dans tous les exemples décrits ci-dessus en référence aux figures 1 à 14, le moyen de positionnement automatique est constitué par un dièdre ouvert vers le bas, c'est-à-dire en direction du pion par rapport auquel le support est centré. Ce dièdre peut bien entendu ne pas s'étendre sur toute la largeur du support mais être limité aux zones destinées à être en appui sur un pion.

Il est également possible d'utiliser d'autres formes de réalisation du moyen de positionnement automatique porté par le support et des pions portés par les moyens de transport, à condition qu'ils présentent des faces d'appui obliques permettant leur déplacement relatif en direction de la position recherchée.

En premier lieu, on peut prévoir de conserver la forme en dièdre des moyens de positionnement décrits ci-dessus en donnant aux pions d'autres formes dont la surface supérieure est arrondie. Les pions du convoyeur et du dispositif de transfert peuvent alors être des cylindres, ou doigts, disposés horizontalement, des demi-cylindres posés sur leur face plane, des portions de cylindre disposés verticalement et surmontés d'une demi-sphère, des demi-sphères posées sur leur face plane...

Tous les moyens de positionnement et tous les pions sont conformés de manière à être en appui l'un sur l'autre par des surfaces obliques. Dans les exemples représentés au dessin, ces surfaces obliques sont disposées symétriquement par rapport au plan vertical passant par la position que doit occuper le support sur le moyen de transport peuvent être utilisés. Il est bien entendu possible de former des moyens de positionnement et des pions à surfaces de coopération obliques mais non symétriques, tout en étant disposées de part et d'autre du plan vertical passant par la position que doit occuper le support sur le moyen de transport.

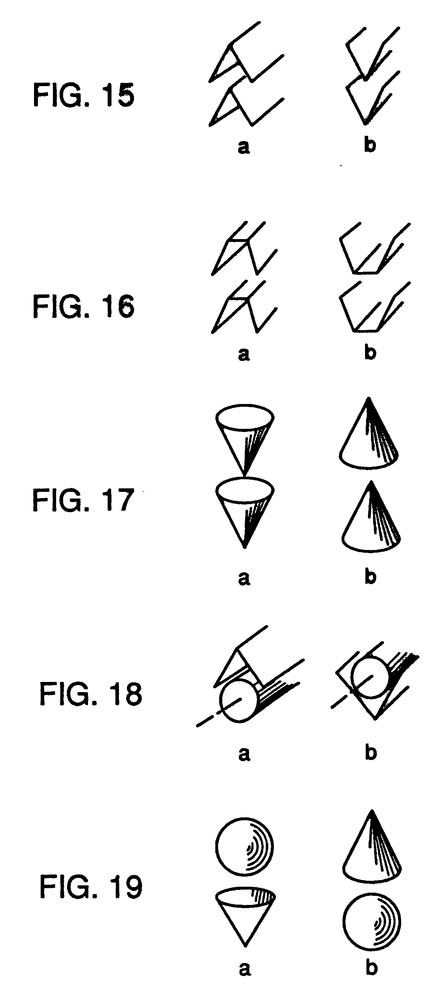

Les figures 15 à 19 montrent de manière très schématique quelques variantes de réalisation desdits moyens de positionnement automatique et pions. Pour chaque dessin, le croquis du haut représente le moyen de positionnement porté par le support et le croquis du bas montre le pion porté par le moyen de transport.

A la figure 15, on utilise des dièdres tournés soit vers le bas (figure 15a), soit vers le haut (figure 15b), pour les moyens de positionnement et pour les pions.

La figure 16 montre des exemples de réalisation dans lesquels les dièdres sont tronqués et ont de ce fait une section trapézoïdale.

Les moyens représentés à la figure 17 utilisent des cônes.

La figure 18a montre une réalisation de même type que celle décrite aux figures 1 à 14, tandis que la figure 18b montre que l'on peut réaliser le pion sous la forme d'un dièdre en utilisant un moyen de positionnement automatique à surface arrondie.

Dans l'exemple de réalisation de la figure 19, un cône et une sphère sont mis en oeuvre. On peut, en variante, utiliser une demi-sphère.

Les variantes de réalisations des formes complémentaires représentées aux figures 15 à 19 permettent, de la même manière que celles représentées aux figures 1 à 14, d'assurer une mise en place précise du support par rapport à un autre support et/ou par rapport à un moyen de transport par le rattrapage des écarts de positionnement dus aux tolérances de manutention.

Il est bien entendu que la présente invention ne se limite pas aux formes de réalisation qui viennent d'être décrites.

Il est par exemple possible de prévoir des portions massives aux extrémités des pieds dans lesquelles seront creusés les moyens de positionnement automatique.

## Revendications

1. Support (200, 210) pour produit céramique destiné à être soit posé sur un convoyeur, soit manipulé par un dispositif de transfert, soit mis en piles, du type comportant au moins un plateau (212, 220, 221) et des pieds (203, 213) dont les parties supérieure et inférieure sont conformées de façon à avoir des formes complémentaires mâle (207, 217, 227, 237) et/ou femelle (204, 214, 224, 234) constituant des moyens de positionnement automatique, chaque pied (203, 213) portant au moins une forme mâle (207, 217, 227, 237) et une forme femelle (204, 214, 224, 234), **caractérisé en ce que** lesdits moyens de positionnement automatique portés par le support (200, 210) sont disposés symétriquement par rapport à l'axe longitudinal (X1) et par rapport à l'axe transversal (X2) du support (200, 210).

2. Support selon la revendication 1, **caractérisé en ce que** le support (200, 210) comporte deux plateaux disposés l'un au-dessus de l'autre et conformés pour le transport de produits différents, ledit support (200, 210) pouvant être utilisé à l'endroit comme à l'envers.

3. Support selon la revendication 1 ou selon la revendication 2, **caractérisé en ce que** l'un au moins des pieds (203, 213) du support (200, 210) comporte un épaulement (208) destiné à éviter un déplacement dudit support (200, 210) dans une direction parallèle à l'axe des pieds (203, 213) lorsqu'il est posé sur un autre support (200, 210) lors de la formation d'une pile et/ou sur un convoyeur et/ou pris en charge par un dispositif de transfert.

4. Support selon l'une quelconque des revendications précédentes, **caractérisé en ce que** le support (210) est constitué de pieds (203, 213) et de traverses (205, 206) reliées aux pieds (203, 213) par leurs extrémités, lesdites traverses (205, 206) étant destinées à permettre le positionnement d'un plateau (220, 221) amovible.

5. Support selon l'une quelconque des revendications 1 à 4, **caractérisé en ce que** les formes complémentaires sont constituées par un dièdre ouvert vers le bas.

6. Support selon l'une quelconque des revendications 1 à 4, **caractérisé en ce que** les formes complémentaires sont constituées par des dièdres tronqués, de section trapézoïdale.

7. Support selon l'une quelconque des revendications 1 à 4, **caractérisé en ce que** les formes complémentaires sont constituées par des cônes.

8. Support selon l'une quelconque des revendications 1 à 4, **caractérisé en ce que** les formes complémentaires portées par les supports sont à surface arrondie.

## Claims

1. A support (200, 210) for a ceramic product intended to be either laid on a conveyor, or manipulated by a transfer device, or stacked, of the type comprising at least one plate (212, 220, 221) and feet (203, 213), the upper and lower parts of which are shaped so as to have complementary male (207, 217, 227, 237) and/or female (204, 214, 224, 234) forms constituting automatic positioning means, each foot (203, 213) bearing at least one male (207, 217, 227, 237) and one female (204, 214, 224, 234) form, **characterised in that** said automatic positioning means borne by the support (200, 210) are arranged symmetrically relative to the longitudinal axis (X1) and relative to the transverse axis (X2) of the support (200, 210).

2. A support according to Claim 1, **characterised in that** the support (200, 210) comprises two plates arranged one above the other and shaped for transporting different products, said support (200, 210) being able to be used both the right way up and upside down.

3. A support according to Claim 1 or Claim 2, **characterised in that** at least one of the feet (203, 213) of the support (200, 210) comprises a shoulder (208) intended to avoid displacement of said support (200, 210) in a direction parallel to the axis of the feet (203, 213) when it is laid on another support (200, 210) upon the formation of a stack and/or when on a conveyor and/or when taken up by a transfer device.

4. A support according to any one of the preceding claims, **characterised in that** the support (210) is formed of feet (203, 213) and crosspieces (205, 206) connected to the feet (203, 213) by their ends, said crosspieces (205, 206) being intended to permit the positioning of a removable plate (220, 221).

5. A support according to any one of Claims 1 to 4, **characterised in that** the complementary forms are formed by a dihedron which is open towards the bottom.

6. A support according to any one of Claims 1 to 4, **characterised in that** the complementary forms are formed by truncated dihedra, of trapezoidal section.

7. A support according to any one of Claims 1 to 4, **characterised in that** the complementary forms are formed by cones.

8. A support according to any one of Claims 1 to 4, **characterised in that** the complementary forms borne by the supports have rounded surfaces.

## Patentansprüche

1. Träger für Keramikprodukte (200, 210), der auf ein Förderband gestellt oder von einer Übergabevorrichtung gehandhabt oder gestapelt werden soll, der Art mit mindestens einer Platte (212, 220, 221) und Füßen (203, 213), deren Ober- und Unterteile so ausgebildet sind, daß sie komplementäre männliche (207, 217, 227, 237) und/oder weibliche Formen (204, 214, 224, 234) aufweisen, die Mittel zur automatischen Positionierung bilden, wobei jeder Fuß (203, 213) mindestens eine männliche Form (207, 217, 227, 237) und eine weibliche Form (204, 214, 224, 234) trägt, **dadurch gekennzeichnet, daß** die vom Träger (200, 210) getragenen Mittel zur automatischen Positionierung symmetrisch zur Längsachse (X1) und zur Querachse (X2) des Trägers (200, 201) angeordnet sind.

2. Träger nach Anspruch 1, **dadurch gekennzeichnet, daß** der Träger (200, 210) zwei Platten umfaßt, die aufeinander angeordnet und für den Transport unterschiedlicher Produkte ausgebildet sind, wobei der Träger (200, 210) sowohl seitenrichtig wie auch seitenverkehrt verwendet werden kann.

3. Träger nach Anspruch 1 oder nach Anspruch 2, **dadurch gekennzeichnet, daß** mindestens einer der Füße (203, 213) des Trägers (200, 210) eine Schulter (208) aufweist, die dazu dient, eine Verschiebung des Trägers (200, 210) in einer Richtung parallel zur Achse der Füße (203, 213) zu vermeiden, wenn er beim Bilden eines Stapels auf einen anderen Träger (200, 210) und/oder auf ein Förderband gestellt und/oder von einer Abnahmevorrichtung abgezogen wird.

4. Träger nach einem der vorhergehenden Ansprüche, **dadurch gekennzeichnet, daß** der Träger (210) aus Füßen (203, 213) und Streben (205, 206) gebildet ist, die mit ihren Enden an den Füßen (203, 213) befestigt sind, wobei die Streben (205, 206) dazu bestimmt sind, die Positionierung einer abnehmbaren Platte (220, 221) zu erlauben.

5. Träger nach einem der Ansprüche 1 bis 4, **dadurch gekennzeichnet, daß** die komplementären Formen aus einem nach unten offenen Dieder bestehen.

6. Träger nach einem der Ansprüche 1 bis 4, **dadurch gekennzeichnet, daß** die komplementären Formen aus stumpfen Diedem mit trapezförmigem Querschnitt bestehen.

7. Träger nach einem der Ansprüche 1 bis 4, **dadurch gekennzeichnet, daß** die komplementären Formen durch Kegel gebildet sind.

8. Träger nach einem der Ansprüche 1 bis 4, **dadurch gekennzeichnet, daß** die komplementären Formen, die von den Trägern getragen werden, eine abgerundete Oberfläche aufweisen.
